# FASCICULE DE BREVET EUROPEEN

(11) **EP 2 542 429 B1**
(45) Date de publication et mention de la délivrance du brevet: **07.05.2014**
(21) Numéro de dépôt: 11706589.6
(22) Date de dépôt: 03.03.2011
(51) Int. Cl.: B60C 9/08, B60C 11/00, B60C 11/18, B60C 9/04

(54) **PNEUMATIQUE POUR VEHICULES COMPORTANT UNE BANDE DE ROULEMENT CONSTITUEE DE PLUSIEURS MELANGES ET UNE ARMATURE DE CARCASSE RADIALE FORMEE D'AU MOINS DEUX COUCHES**
FAHRZEUGREIFEN MIT EINER LAUFFLÄCHE AUS MEHREREN GUMMIMISCHUNGEN UND RADIALKARKASSENVERSTÄRKUNG AUS MINDESTENS ZWEI LAGEN
VEHICLE TIRE COMPRISING A TREAD CONSISTING OF A PLURALITY OF COMPOUNDS AND A RADIAL PLY CARCASS REINFORCEMENT CONSISTING OF AT LEAST TWO LAYERS

(30) Priorité: 28.05.2010 US 349370 P; 05.03.2010 FR 1051608
(43) Date de publication de la demande: 09.01.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63140 Chatel-Guyon (FR); PROST, Pascal, F-63200 Riom (FR); VALLE, Alain, F-63118 Cebazat (FR); RUFFENACH, Jean-Marc, F-63118 Cebazat (FR)
(74) Mandataire: Le Cam, Véronique Marie Christine
(86) Numéro de dépôt international: PCT/EP2011/053183
(87) Numéro de publication internationale: WO 2011/107541

(56) Documents cités:
- EP-A1- 2 106 931
- EP-A2- 1 004 460

## Description

L'invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un pneumatique de motocyclette, ou moto.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Le document EP 1 004 460 décrit un pneumatique pour motocyclette comportant une armature de carcasse à deux couches et dont la bande de roulement est constituée de différents mélanges caoutchouteux répartis selon la direction axiale.

L'invention a pour but de fournir un pneumatique pour véhicule motorisé à deux roues permettant d'améliorer les propriétés d'usure et d'adhérence de la bande de roulement dudit pneumatique tout en conservant voire améliorant le confort de roulage.

Ce but a été atteint selon l'invention par un pneumatique pour véhicule motorisé à deux roues comportant une armature de carcasse radiale, formée d'au moins deux couches d'éléments de renforcement, au moins l'une d'entre elle étant ancrée par retournement autour d'une tringle de chaque côté du pneumatique dans un bourrelet, chaque bourrelet se prolongeant radialement vers l'extérieur par un flanc, les flancs rejoignant radialement vers l'extérieur une bande de roulement, et comportant sous la bande de roulement une structure de renforcement de sommet constituée d'au moins une couche d'éléments de renforcement, au moins la surface de la bande de roulement étant constituée d'un premier mélange polymérique s'étendant au moins dans la zone du plan équatorial et d'au moins un deuxième mélange polymérique présentant des propriétés physico-chimique différentes de celles dudit premier mélange polymérique, et la densité d'éléments de renforcement de la couche d'armature de carcasse radialement intérieure étant inférieure à celle de la couche d'armature de carcasse radialement extérieure.

La direction longitudinale du pneumatique, ou direction circonférentielle, est la direction correspondant à la périphérie du pneumatique et définie par la direction de roulement du pneumatique.

La direction transversale ou axiale du pneumatique est parallèle à l'axe de rotation du pneumatique.

L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement et donc dans la partie centrale de la bande de roulement.

Un plan radial ou méridien contient l'axe de rotation du pneumatique.

La direction radiale est une direction coupant l'axe de rotation du pneumatique et perpendiculaire à celui-ci. La direction radiale est l'intersection entre un plan circonférentiel et un plan radial.

La largeur axiale d'une zone constituée du deuxième mélange polymérique est mesurée sur un profil méridien selon la direction axiale entre les extrémités de ladite zone, lorsque le pneumatique est monté sur sa jante de service et gonflé à sa pression recommandée.

Au sens de l'invention, les éléments de renforcement d'une couche d'une armature de carcasse radiale forment, dans le plan équatorial, un angle avec la direction circonférentielle compris entre 65 et 90°.

La bande de roulement du pneumatique selon l'invention est donc constituée au moins en surface d'une partie ou bande circonférentielle centrale constituée d'un premier mélange polymérique et d'au moins deux parties ou bandes latérales d'un autre mélange polymérique. Les bandes latérales sont avantageusement identiques pour réaliser un pneumatique symétrique mais peuvent selon certaines réalisations être constituées de mélanges différents. La partie ou bande circonférentielle centrale s'étend axialement, conformément à l'invention, sur une zone comprenant le plan équatorial.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Des variantes avantageuses de l'invention peuvent prévoir la présence de cinq bandes circonférentielles ou plus pour former au moins la surface de la bande de roulement et ainsi conférer une évolution graduelle des propriétés de ladite bande de roulement depuis le plan équatorial vers les épaules. De même que précédemment, une telle réalisation peut être symétrique par rapport au plan équatorial ou non, la répartition des bandes diffère soit par leur composition soit par leur répartition par rapport au plan équatorial.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Selon l'invention, le deuxième mélange polymérique présente une dureté Shore A différente de celle du premier mélange polymérique.

La dureté Shore A des mélanges polymériques après cuisson est appréciée conformément à la norme ASTM D 2240-86.

D'autres propriétés du deuxième mélange polymérique peuvent être différentes. Il peut par exemple s'agir de la couleur qui peut apporter un effet fonctionnel et/ou esthétique.

En outre, selon l'invention, la densité d'éléments de renforcement de la couche d'armature de carcasse radialement intérieure est inférieure à celle de la couche d'armature de carcasse radialement extérieure.

Un pneumatique ainsi réalisé selon l'invention permet d'améliorer les performances en termes notamment d'usure et d'adhérence du fait notamment des choix faits concernant les mélanges polymériques constituants la bande de roulement. En outre, la variation de densité d'éléments de renforcement entre les couches d'armature de carcasse, la couche radialement extérieure présentant une densité supérieure va permettre d'améliorer le confort de roulage. Les inventeurs pensent avoir mis en évidence que la présence d'une densité d'éléments de renforcement élevée à la base des mélanges polymériques les plus souples constituant la bande de roulement du pneumatique permet d'éviter des déformations trop importantes du mélange polymérique entre lesdits éléments de renforcement lors de déformations prononcées desdits mélanges polymériques constituant la bande de roulement. Ainsi, lorsque les mélanges polymériques les plus souples constituent les parties axialement extérieures de la bande de roulement, la variation de densité d'éléments de renforcement proposée selon l'invention permet d'améliorer le confort de roulage lors d'une conduite en carrossage.

Par ailleurs, la présence d'au moins une couche de l'armature de carcasse présentant un nombre plus restreint d'éléments de renforcement donc une densité desdits éléments de renforcement inférieure semble améliorer les performances du pneumatique pour ce qui concerne l'absorption des irrégularités du sol sur lequel le véhicule circule. La présence d'un nombre d'éléments de renforcement moins important dans au moins une des couches d'armature de carcasse va ainsi permettre un confort de roulage amélioré notamment lors de roulage en ligne droite.

De préférence, selon l'invention, le rapport de la densité d'éléments de renforcements de la couche d'armature de carcasse radialement intérieure sur la densité d'éléments de renforcements de la couche d'armature de carcasse radialement extérieure est compris entre 2/3 et 8/9. Un écart de moins de 1/9 entre les densités de chacune des couches d'armature de carcasse serait trop faible pour obtenir une amélioration du confort de roulage perceptible par un pilote. Un écart de plus de 1/3 entre les densités de chacune des couches d'armature de carcasse, notamment avec une densité réduite dans la couche d'armature de carcasse radialement intérieure, entraîne une diminution de la rigidité de dérive et donc une détérioration du comportement général.

Avantageusement, R₁ étant le rayon intérieur d'une tringle et R₂ le rayon du de la couche d'armature de carcasse radialement extérieure dans le plan équatorial, la densité d'éléments de renforcement de la couche d'armature de carcasse radialement intérieure est comprise entre 70xR₁/R₂ et 110xR₁/R₂ éléments de renforcement par décimètre.

R₁ est le rayon intérieur de la tringle, c'est-à-dire le rayon du plus grand cercle inscrit dans une tringle.

R₂ est le rayon du de la couche d'armature de carcasse radialement extérieure dans le plan équatorial, c'est-à-dire le rayon du plus grand cercle inscrit dans la couche d'armature de carcasse radialement extérieure, dans le plan équatorial.

Le rayon R₂ est mesuré sur le pneumatique, celui-ci étant monté sur sa jante de service et gonflé à sa pression recommandée.

Concernant la couche d'armature de carcasse radialement intérieure, des valeurs de densité inférieures à 70xR₁/R₂ éléments de renforcement par décimètre peuvent conduire à des problèmes de fonctionnement du pneumatique et des valeurs de densité supérieures à 110xR₁/R₂ éléments de renforcement par décimètre montrent leur limite quant à une amélioration du confort de roulage en ligne droite.

Avantageusement encore, R₁ étant le rayon intérieur d'une tringle et R₂ le rayon du de la couche d'armature de carcasse radialement extérieure dans le plan équatorial, la densité d'éléments de renforcement de la couche d'armature de carcasse radialement extérieure est comprise entre 100xR₁/R₂ et 130xR₁/R₂ éléments de renforcement par décimètre.

Concernant la couche d'armature de carcasse radialement extérieure, des valeurs de densité inférieures à 100xR₁/R₂ éléments de renforcement par décimètre montrent leur limite quant à une amélioration du confort de roulage par exemple en carrossage et des valeurs de densité supérieures à 130xR₁/R₂ éléments de renforcement par décimètre peuvent conduire à des problèmes de fonctionnement du pneumatique.

Selon un premier mode de réalisation de l'invention, le pneumatique étant destiné à équiper la roue arrière du véhicule, la zone de la surface de la bande de roulement constituée du premier mélange polymérique présente une largeur axiale comprise entre 15 et 30 % de la largeur axiale de la bande de roulement.

Comme expliqué précédemment, la largeur axiale de la bande de roulement est mesurée sur un profil méridien selon la direction axiale entre les extrémités de la bande de roulement, lorsque le pneumatique est monté sur sa jante de service et gonflé à sa pression recommandée.

Un pneumatique destiné à équiper la roue arrière d'une motocyclette est plus particulièrement sensible à l'usure lorsqu'il roule en ligne droite ; le pneumatique ainsi proposé par l'invention selon ce premier mode de réalisation permet avec un mélange polymérique résistant mieux à l'usure d'améliorer notablement la performance relative à l'usure. Le mélange polymérique des parties latérales de la bande de roulement est quant à lui avantageusement performant en ce qui concerne les propriétés d'adhérence.

Selon un deuxième mode de réalisation de l'invention, le pneumatique étant destiné à équiper la roue avant du véhicule, la zone de la surface de la bande de roulement constituée du premier mélange polymérique présente une largeur axiale comprise entre 45 et 70 % de la largeur axiale de la bande de roulement.

Un pneumatique destiné à équiper la roue avant d'une motocyclette est moins sensible à l'usure centre que celui destiné à équiper la roue arrière. Le pneumatique ainsi proposé selon ce deuxième mode de réalisation comporte avantageusement une bande de roulement constituée de mélanges polymériques dont les performances relatives à l'usure sont moins élevées que celles des mélanges du pneumatique destiné à équiper la roue arrière. La partie centrale de la bande de roulement est ainsi relativement large et les parties latérales sont avantageusement constituées d'un mélange polymérique dont les performances en adhérence sont élevées.

A titre d'exemple, le mélange polymérique de la partie centrale du pneumatique destiné à équiper la roue avant présente des propriétés sensiblement équivalentes à celles du mélange polymérique constituant les parties latérales du pneumatique destiné à équiper la roue arrière.

Une variante de réalisation avantageuse de l'invention prévoit que la structure de renforcement de sommet comporte au moins une couche d'éléments de renforcement circonférentiels.

De préférence encore, les éléments de renforcement de la couche d'éléments de renforcement circonférentiels présentent un module d'élasticité supérieur à 6000 N/mm².

De préférence également, les éléments de renforcement de la couche d'éléments de renforcement circonférentiels sont métalliques et/ou textiles et/ou en verre.

Selon une variante de l'invention, la structure de renforcement de sommet comporte au moins deux couches d'éléments de renforcement et d'une couche à la suivante les tronçons forment entre eux des angles compris entre 20 et 160°.

Selon une réalisation préférée de l'invention, les éléments de renforcement des couches de travail sont en matériau textile.

Selon un autre mode de réalisation de l'invention, les éléments de renforcement des couches de travail sont en métal.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon un premier mode de réalisation de l'invention,
- figure 2, une vue partielle agrandie d'une partie du schéma de la figure 1,
- figure 3, une vue méridienne d'un schéma d'un pneumatique selon un deuxième mode de réalisation de l'invention.

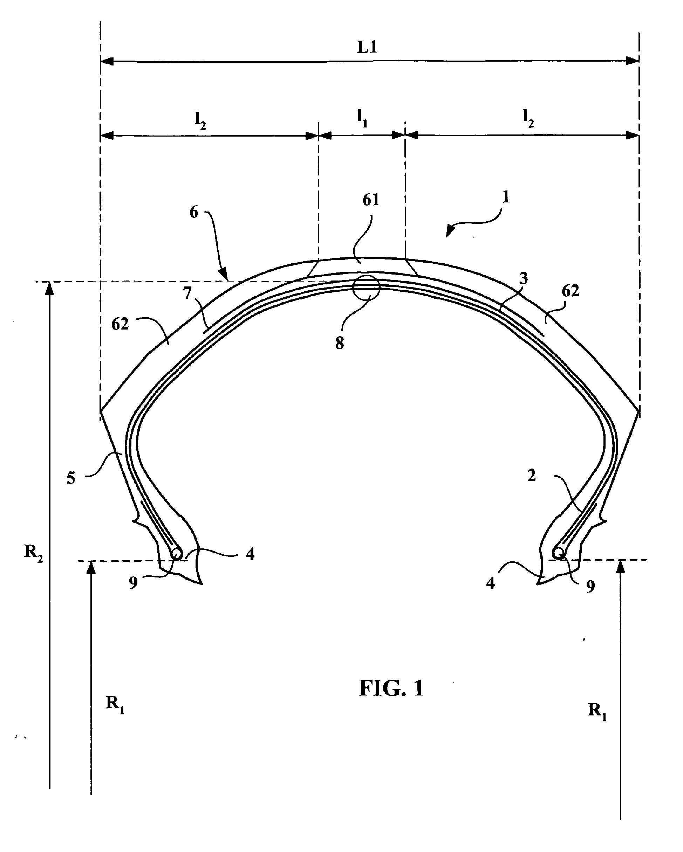

Les figures 1 à 3 ne sont pas représentées à l'échelle pour en simplifier la compréhension.

La figure 1 représente un pneumatique 1 de type 190/50 ZR 17 destiné à équiper la roue arrière d'une motocyclette comprenant une armature de carcasse constituée de deux couches 2, 3 comprenant des éléments de renforcement de type textile et plus précisément en polyamide aliphatique 140 tex / 2. Les couches 2, 3 de l'armature de carcasse sont constituées d'éléments de renforcement formant un angle avec la direction longitudinale du pneumatique dans le plan équatorial égal à 80° et croisés d'une couche à la suivante.

Les couches 2, 3 de l'armature de carcasse sont ancrées de chaque côté du pneumatique 1 dans un bourrelet 4 dont la base est destinée à être montée sur un siège de jante. Chaque bourrelet 4 est prolongé radialement vers l'extérieur par un flanc 5, ledit flanc 5 rejoignant radialement vers l'extérieur la bande de roulement 6.

La couche 2 présente des retournements autour des tringles 9.

Le rayon R₁, c'est-à-dire le rayon intérieur d'une tringle est égal à 219 mm.

Le rayon R₂, le rayon du de la couche d'armature de carcasse radialement extérieure dans le plan équatorial, est égal à 303 mm.

Le pneumatique 1 comporte encore une armature de sommet constituée de d'une couche 7 d'éléments de renforcement circonférentiels en matériau textile et plus précisément en polyamide aromatique 167 tex / 2.

La couche d'éléments de renforcement circonférentiels 7 est avantageusement constituée d'un seul fil enroulé pour former un angle avec la direction longitudinale sensiblement égal à 0°. La couche d'éléments de renforcement circonférentiels 7 peut encore être réalisée par l'enroulement simultané de plusieurs fils nus ou sous forme de bandelettes lorsqu'ils sont noyés dans du caoutchouc.

La bande de roulement 6 est constituée, conformément à l'invention, d'un premier mélange de caoutchouc 61 dans sa partie centrale et d'un deuxième mélange de caoutchouc 62 dans les parties latérales. Les jonctions entre les parties 61 et 62 formant la bande de roulement 6 sont avantageusement réalisées de manière progressive avec une interface en biseau, l'angle du biseau étant compris entre 20 et 60° par rapport au à la surface extérieure de la bande de roulement 6 du pneumatique 1.

Le mélange de caoutchouc 62 est avantageusement choisi de sorte que ses propriétés d'adhérence sont supérieures à celles du mélange de caoutchouc 61, ledit mélange de caoutchouc 61 étant plus particulièrement choisi pour sa résistance à l'usure. La bande de roulement ainsi réalisé peut permettre de définir un compromis résistance à l'usure / adhérence favorable par rapport à ce qu'il est possible d'obtenir avec un seul mélange de caoutchouc.

La largeur axiale l₁ de la partie centrale correspondant au mélange de caoutchouc 61 est égale à 41 mm et représente environ 22 % de la largeur axiale L1 de la bande de roulement égale à 188 mm.

Les largeurs axiales l₂ de chacune des parties latérales correspondant au mélange de caoutchouc 62 sont identiques et égales à 73.5 mm et représentent environ 39 % de la largeur axiale L1 de la bande de roulement.

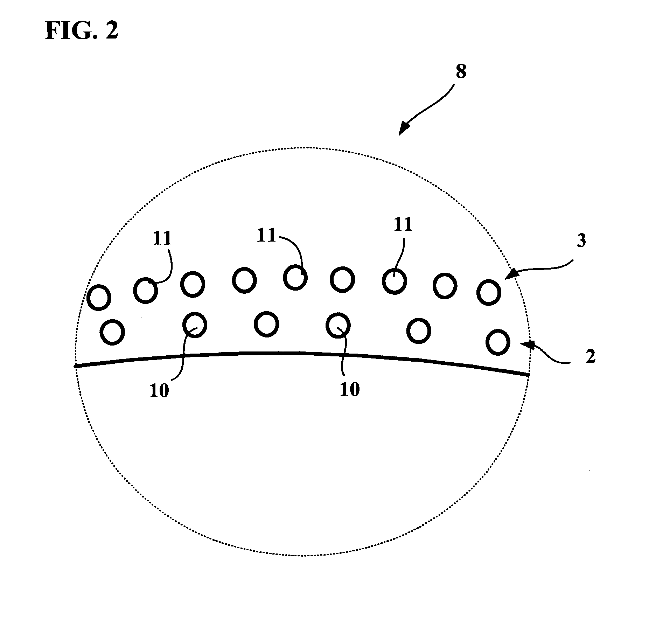

La figure 2 illustre un agrandissement de la zone 8 et indique schématiquement la différence de densité de chacune des couches 2 et 3 d'armature de carcasse.

La couche d'armature de carcasse 2 est constituée d'éléments de renforcement 10 et la couche d'armature de carcasse 3 est constituée d'éléments de renforcement 11.

La densité d'éléments de renforcement de la couche 2 d'armature de carcasse radialement intérieure est égale à 98xR₁/R₂ soit 70.8 éléments de renforcement par décimètre.

La densité d'éléments de renforcement de la couche 3 d'armature de carcasse radialement extérieure est égale à 123xR₁/R₂ soit 88.9 éléments de renforcement 10 par décimètre.

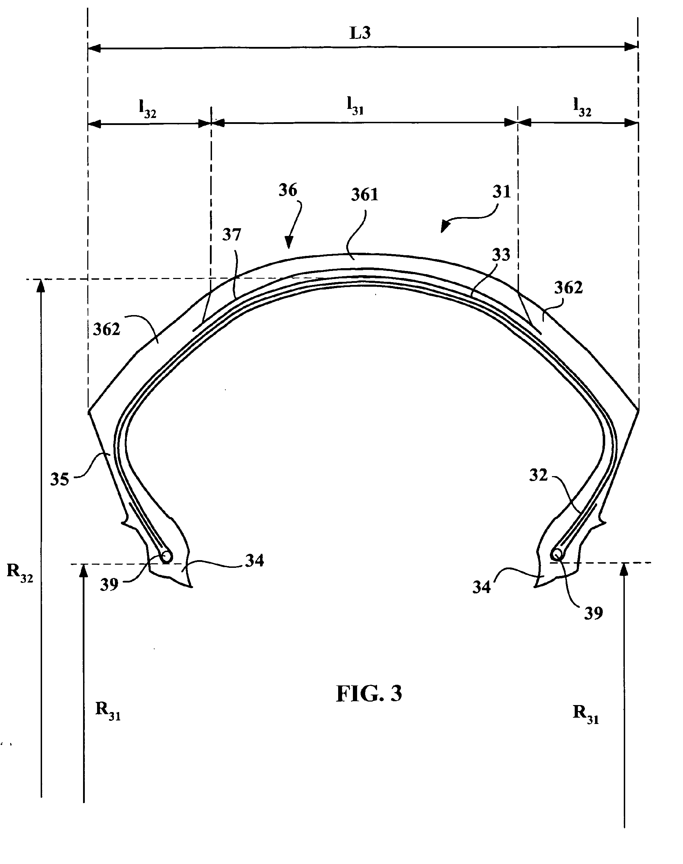

Sur la figure 3, est représenté un pneumatique 31 de type 120/70 ZR 17 destiné à équiper la roue avant d'une motocyclette. Ce pneumatique 31 est semblable à celui de la figure 1 et en diffère d'une part par des angles des éléments de renforcement des couches de l'armature de carcasse dans le plan équatorial égaux à 72°.

Le pneumatique 31 diffère encore de celui de la figure 1 par les largeurs axiales des zones centrale et latérales correspondant respectivement aux mélanges de caoutchouc 361 et 362.

La largeur axiale l₃₁ de la partie centrale correspondant au mélange de caoutchouc 361 est égale à 73.6 mm et représente environ 61 % de la largeur axiale L3 de la bande de roulement égale à 120 mm.

Les largeurs axiales l₃₂ de chacune des parties latérales correspondant au mélange de caoutchouc 362 sont identiques et égales à 23.2 mm et représentent environ 19 % de la largeur axiale L3 de la bande de roulement.

Par ailleurs, le rayon R₃₁, c'est-à-dire le rayon intérieur d'une tringle est égal à 219 mm et le rayon R₃₂, c'est-à-dire le rayon de la bande de roulement dans le plan équatorial, est égal à 290.5 mm.

La densité d'éléments de renforcement de la couche 2 d'armature de carcasse radialement intérieure est égale à 98xR₃₁/R₃₂ soit 73.9 éléments de renforcement par décimètre.

La densité d'éléments de renforcement de la couche 3 d'armature de carcasse radialement extérieure est égale à 123xR₃₁/R₃₂ soit 92.7 éléments de renforcement 10 par décimètre.

L'invention ne doit pas être comprise comme étant limitée à la description des exemples ci-dessus et s'étend notamment à des pneumatiques pouvant comporter des armatures de carcasse ou de sommet plus complexes comportant par exemple trois, ou plus, couches de travail d'éléments de renforcement faisant un angle avec la direction circonférentielle.

## Revendications

1. Pneumatique (1) pour véhicule motorisé à deux roues comportant une armature de carcasse radiale, formée d'au moins deux couches (2, 3) d'éléments de renforcement, au moins l'une d'entre elle étant ancrée par retournement autour d'une tringle (9) de chaque côté du pneumatique dans un bourrelet (4), chaque bourrelet se prolongeant radialement vers l'extérieur par un flanc (5), les flancs rejoignant radialement vers l'extérieur une bande de roulement (6), et comportant sous la bande de roulement une structure de renforcement de sommet constituée d'au moins une couche d'éléments de renforcement, au moins la surface de la bande de roulement est constituée d'un premier mélange polymérique (61) s'étendant au moins dans la zone du plan équatorial et d'au moins un deuxième mélange polymérique (62) présentant des propriétés physico-chimique différentes de celles dudit premier mélange polymérique, **caractérisé en ce que** la densité d'éléments de renforcement de la couche (2) d'armature de carcasse radialement intérieure est inférieure à celle de la couche (3) d'armature de carcasse radialement extérieure.

2. Pneumatique selon la revendication 1, **caractérisé en ce que** le deuxième mélange polymérique (62) est d'une composition différente de celle du premier mélange polymérique (61).

3. Pneumatique selon l'une des revendications 1 ou 2, **caractérisé en ce que** le deuxième mélange polymérique (62) présente des propriétés d'adhérence supérieures à celles dudit premier mélange polymérique (61).

4. Pneumatique selon l'une des revendications 1 à 3, **caractérisé en ce que** le deuxième mélange polymérique (62) présente une dureté Shore A inférieure à celle du premier mélange polymérique (61).

5. Pneumatique selon l'une des revendications 1 à 4, **caractérisé en ce que** le rapport de la densité d'éléments de renforcements (10) de la couche (2) d'armature de carcasse radialement intérieure sur la densité d'éléments de renforcement (11) de la couche (3) d'armature de carcasse radialement extérieure est compris entre 2/3 et 8/9.

6. Pneumatique selon l'une des revendications 1 à 5, R₁ étant le rayon intérieur d'une tringle et R₂ le rayon du de la couche d'armature de carcasse radialement extérieure dans le plan équatorial, **caractérisé en ce que** la densité d'éléments de renforcement (10) de la couche (2) d'armature de carcasse radialement intérieure est comprise entre 70xR₁/R₂ et 110xR₁/R₂ éléments de renforcement par décimètre.

7. Pneumatique selon l'une des revendications 1 à 6, R₁ étant le rayon intérieur d'une tringle et R₂ le rayon du de la couche d'armature de carcasse radialement extérieure dans le plan équatorial, **caractérisé en ce que** la densité d'éléments de renforcement (11) de la couche (3) d'armature de carcasse radialement extérieure est comprise entre 100xR₁/R₂ et 130xR₁/R₂ éléments de renforcement par décimètre.

8. Pneumatique selon l'une des revendications précédentes, le pneumatique étant destiné à équiper la roue arrière du véhicule, **caractérisé en ce que** la zone de la surface de la bande de roulement (6) constituée du premier mélange polymérique (61) présente une largeur axiale comprise entre 15 et 30 % de la largeur axiale de la bande de roulement (6).

9. Pneumatique selon l'une des revendications 1 à 7, le pneumatique étant destiné à équiper la roue avant du véhicule, **caractérisé en ce que** la zone de la surface de la bande de roulement (6) constituée du premier mélange polymérique (61) présente une largeur axiale comprise entre 45 et 70 % de la largeur axiale de la bande de roulement.

10. Pneumatique selon l'une des revendications précédentes, **caractérisé en ce que** la structure de renforcement de sommet comporte au moins une couche (7) d'éléments de renforcement circonférentiels.

11. Pneumatique selon l'une des revendications précédentes, **caractérisé en ce que** la structure de renforcement de sommet comporte au moins deux couches d'éléments de renforcement et **en ce que** d'une couche à la suivante les tronçons forment entre eux des angles compris entre 20 et 160°.

12. Utilisation d'un pneumatique tel que décrit selon l'une des revendications 1 à 11 pour un véhicule motorisé à deux roues tel qu'une motocyclette.

## Patentansprüche

1. Reifen (1) für Kraftfahrzeug mit zwei Rädern, der eine Radialkarkassenverstärkung aufweist, die aus mindestens zwei Lagen (2, 3) von Verstärkungselementen ausgebildet ist, wobei mindestens eine davon durch Umbiegen um einen Wulstring (9) auf jeder Seite des Reifens in einem Wulst (4) verankert ist, wobei sich jeder Wulst radial nach außen durch eine Flanke (5) verlängert, wobei die Flanken radial nach außen eine Lauffläche (6) erreichen und unter der Lauffläche eine Scheitelverstärkungsstruktur aufweisen, die aus mindestens einer Lage von Verstärkungselementen besteht, wobei mindestens die Oberfläche der Lauffläche aus einem ersten Polymergemisch (61) besteht, das sich mindestens in der Zone der Äquatorialebene erstreckt, und mindestens aus einem zweiten Polymergemisch (62), das physikalisch-chemische Eigenschaften aufweist, die von denjenigen des ersten Polymergemischs verschieden sind, **dadurch gekennzeichnet, dass** die Dichte von Verstärkungselementen der Lage (2) der radial inneren Karkassenverstärkung kleiner ist als die der Lage (3) der radial äußeren Karkassenverstärkung.

2. Reifen nach Anspruch 1, **dadurch gekennzeichnet, dass** das zweite Polymergemisch (62) eine von der Zusammensetzung des ersten Polymergemischs (61) verschiedene Zusammensetzung hat.

3. Reifen nach Anspruch 1 oder 2, **dadurch gekennzeichnet, dass** das zweite Polymergemisch (62) Haftungseigenschaften aufweist, die höher sind als die des ersten Polymergemischs (61).

4. Reifen nach einem der Ansprüche 1 bis 3, **dadurch gekennzeichnet, dass** das zweite Polymergemisch (62) eine Shore A-Härte aufweist, die kleiner ist als die des ersten Polymergemischs (61).

5. Reifen nach einem der Ansprüche 1 bis 4, **dadurch gekennzeichnet, dass** das Verhältnis der Dichte von Verstärkungselementen (10) der Lage (2) der radial inneren Karkassenverstärkung zu der Dichte von Verstärkungselementen (11) der Lage (3) der radial äußeren Karkassenverstärkung zwischen 2/3 und 8/9 liegt.

6. Reifen nach einem der Ansprüche 1 bis 5, wobei R₁ der Innenradius eines Wulstrings ist und R₂ der Radius der radial äußeren Karkassenverstärkung in der Äquatorialebene ist, **dadurch gekennzeichnet, dass** die Dichte von Verstärkungselementen (10) der Lage (2) der radial inneren Karkassenverstärkung zwischen 70 x R₁/R₂ und 110 x R₁/R₂ Verstärkungselemente pro Dezimeter liegt.

7. Reifen nach einem der Ansprüche 1 bis 6, wobei R₁ der Innenradius eines Wulstrings ist und R₂ der Radius der Lage der radial äußeren Karkassenverstärkung in der Äquatorialebene ist, **dadurch gekennzeichnet, dass** die Dichte von Verstärkungselementen (11) der Lage (3) der radial äußeren Karkassenverstärkung zwischen 100 x R₁/R₂ und 130 x R₁/R₂ Verstärkungselemente pro Dezimeter liegt.

8. Reifen nach einem der vorhergehenden Ansprüche, wobei der Reifen dazu bestimmt ist, das Hinterrad des Fahrzeugs auszustatten, **dadurch gekennzeichnet, dass** die Oberflächenzone der Lauffläche (6), die aus dem ersten Polymergemisch (61) besteht, eine axiale Breite aufweist, die zwischen 15 und 30% der axialen Breite der Lauffläche (6) aufweist.

9. Reifen nach einem der Ansprüche 1 bis 7, wobei der Reifen dazu bestimmt ist, das Vorderrad des Fahrzeugs auszustatten, **dadurch gekennzeichnet, dass** die Oberflächenzone der Lauffläche (6), die aus dem ersten Polymergemisch (61) besteht, eine axiale Breite aufweist, die zwischen 45 und 70% der axialen Breite der Lauffläche liegt.

10. Reifen nach einem der vorhergehenden Ansprüche, **dadurch gekennzeichnet, dass** die Scheitelverstärkungsstruktur mindestens eine Lage (7) umfängliche Verstärkungselemente aufweist.

11. Reifen nach einem der vorhergehenden Ansprüche, **dadurch gekennzeichnet, dass** die Scheitelverstärkungsstruktur mindestens zwei Lageen Verstärkungselemente aufweist, und dass von einer Lage zur nächsten die Abschnitte untereinander Winkel bilden, die zwischen 20 und 160° liegen.

12. Verwendung eines Reifens, wie er nach einem der Ansprüche 1 bis 11 beschrieben ist, für ein Zweiradkraftfahrzeug, wie zum Beispiel ein Motorrad.

## Claims

1. Tyre (1) for motorized two-wheeled vehicle, comprising a radial carcass reinforcement formed of at least two layers (2, 3) of reinforcing elements, at least one of which is anchored by being turned up around a bead core (9) on each side of the tyre inside a bead (4), each bead being continued radially outwardly by a sidewall (5), the sidewalls being joined radially outwardly to a tread (6), and comprising underneath the tread a crown reinforcement structure consisting of at least one layer of reinforcing elements, at least the tread surface consists of a first polymeric compound (61) extending in at least the region of the equatorial plane and at least one second polymeric compound (62) having physicochemical properties different from those of said first polymeric compound, **characterized in that** the density of reinforcing elements in the radially inner carcass reinforcement layer (2) is less than that in the radially outer carcass reinforcement layer (3).

2. Tyre according to Claim 1, **characterized in that** the second polymeric compound (62) is of a different composition from that of the first polymeric compound (61).

3. Tyre according to either of Claims 1 or 2, **characterized in that** the second polymeric compound (62) has grip properties superior to those of said first polymeric compound (61).

4. Tyre according to one of Claims 1 to 3, **characterized in that** the second polymeric compound (62) has a Shore A hardness less than that of the first polymeric compound (61).

5. Tyre according to one of Claims 1 to 4, **characterized in that** the ratio of the density of reinforcing elements (10) in the radially inner carcass reinforcement layer (2) to the density of reinforcing elements (11) in the radially outer carcass reinforcement layer (3) is between 2/3 and 8/9.

6. Tyre according to one of Claims 1 to 5, R₁ being the inside radius of a bead core and R₂ the radius of the radially outer carcass reinforcement layer in the equatorial plane, **characterized in that** the density of reinforcing elements (10) in the radially inner carcass reinforcement layer (2) is between 70×R₁/R₂ and 110×R₁/R₂ reinforcing elements per decimetre.

7. Tyre according to one of Claims 1 to 6, R₁ being the inside radius of a bead core and R₂ the radius of the radially outer carcass reinforcement layer in the equatorial plane, **characterized in that** the density of reinforcing elements (11) in the radially outer carcass reinforcement layer (3) is between 100×R₁/R₂ and 130×R₁/R₂ reinforcing elements per decimetre.

8. Tyre according to one of the preceding claims, the tyre being intended to be fitted to the rear wheel of the vehicle, **characterized in that** the region of the tread surface formed by the first polymeric compound has an axial width of between 15 and 30% of the axial width of the tread.

9. Tyre according to one of Claims 1 to 7, the tyre being intended to be fitted to the front wheel of the vehicle, **characterized in that** the region of the tread surface formed by the first polymeric compound (61) has an axial width of between 45 and 70 % of the axial width of the tread.

10. Tyre according to one of the preceding claims, **characterized in that** the crown reinforcement structure comprises at least one layer (7) of circumferential reinforcing elements.

11. Tyre according to one of the preceding claims, **characterized in that** the crown reinforcement structure comprises at least two layers of reinforcing elements and **in that** from one layer to the next the sections form angles with each other of between 20° and 160°.

12. Use of a tyre as described in accordance with one of Claims 1 to 11 for a motorized two-wheeled vehicle such as a motorcycle.
